# EUROPÄISCHE PATENTSCHRIFT

(11) **EP 4 374 341 B1**
(45) Veröffentlichungstag und Bekanntmachung des Hinweises auf die Patenterteilung: **08.07.2026**
(21) Anmeldenummer: 22738361.9
(22) Anmeldetag: 21.06.2022
(51) Int. Cl.: G06V 20/52, G06V 20/64

(54) **VERFAHREN ZUR ÜBERWACHUNG EINES LADERAUMS**
METHOD FOR MONITORING A LOADING AREA
PROCÉDÉ DE SURVEILLANCE D'UNE ZONE DE CHARGEMENT

(30) Priorität: 21.07.2021 DE 102021118874
(43) Veröffentlichungstag der Anmeldung: 29.05.2024
(73) Patentinhaber: ZF CV Systems Global GmbH, 3006 Bern (CH)
(72) Erfinder: FEYERABEND, Konrad, 30625 Hannover (DE); KÜHNE, Sebastian, 31157 Sarstedt (DE); ZYMERI, Gafur, 30952 Ronnenberg (DE)
(74) Vertreter: ZF Friedrichshafen AG
(86) Internationale Anmeldenummer: PCT/EP2022/066860
(87) Internationale Veröffentlichungsnummer: WO 2023/001466

(56) Entgegenhaltungen:
- EP-A1- 3 401 217
- DE-A1- 102006 028 627
- US-A1- 2019 114 577

## Beschreibung

Die Erfindung betrifft ein Verfahren zur Überwachung eines Laderaums, bei dem das Innere des Laderaums mit mindestens einem abstandsmessenden, tiefenempfindlichen Sensor dreidimensional vermessen wird, wobei die die Messpunkte oder Messpunktmengen beschreibenden 3D-Daten als Datenmengen (3D-Punktwolke) gespeichert werden.

Die Überwachung von Laderäumen durch Überwachungssysteme, insbesondere durch elektronische Systeme, nimmt bei den heutigen Verkehrsströmen und den Anforderungen an die Logistik von Gütern einen immer breiteren Raum ein. Insbesondere die Laderäume von Lkw und von Containern stehen in dieser Hinsicht bei Flottenbetreibern, Speditionen und Versandhandel im Fokus und müssen möglichst effizient genutzt werden. Dazu sind in Abhängigkeit vom Befüllungsgrad des Laderaums auch die Be- und Entladevorgänge zu planen.

Oft wird eine solche Überwachung dadurch durchgeführt, dass die Objekte oder Ladungsteile, die in einen Laderaum verladen werden, vor oder während der Verladung gemessen, gescannt oder in anderer Weise bestimmt werden. So sind Verfahren bekannt, bei denen etwa Kameras an Gabelstaplern montiert sind, die während der Verladung die einzelnen Ladungsstücke scannen und die Ergebnisse zu einer Gesamtladung bzw. zu einem Füllungsgrad innerhalb des Laderaums aufaddieren. Andere Lösung arbeiten mit an Ladungsteilen befestigten RFID-Tags/-Etiketten (RFID = *radio frequency identification* oder Funkwellen-Identifikation), die während der Verladung oder innerhalb des Laderaums von entsprechenden Antennen im Laderaum oder etwa im Verladebereich an der Rampe detektiert werden. Eine genaue Bestimmung eines örtlich bestimmten Ladungszustands innerhalb des Laderaums ist dadurch nur bedingt möglich. Zudem erfordern solche Verfahren relativ viele Einrichtungen in der gesamten die Ladung umgebenden Infrastruktur, d. h. an Ladestellen, Rampen, an Ladefahrzeugen etc., die dann natürlich in einer geeigneten Form erst zusammengefasst und bewertet werden müssen.

Im Stand der Technik sind auch Verfahren bekannt, die mit Hilfe rechnergestützter Vermessungen einzelne Ladungsteile örtlich bestimmen und deren Größe oder Abmessung identifizieren können.

So offenbart die EP 3 232 404 A1 ein Verfahren und ein System für die Vermessung der Dimensionen eines Zielobjektes bzw. eines Ladungsteils auf einer Palette oder auf einem Träger, wobei mithilfe eines Sensors oder einer tiefenempfindlichen Kamera ein 3D-Datensatz ermittelt wird, der mithilfe von Tiefendaten, also Abstandsdaten (Abstand vom Sensor), den dreidimensionalen, physikalischen Raum beschreibt, den das Zielobjekt einnimmt.

Die so erhaltenen 3D-Daten werden in einem Datenraum, also in einer Datenwolke ("*data cloud*") oder so genannten Punktwolke ("*point cloud*") gespeichert. Die im Datenraum gespeicherten Daten des Zielobjektes sind miteinander über entsprechende Markierungen oder Indizierungen verbunden und enthalten nicht nur die Daten des dreidimensionalen Raums des Zielobjektes, sondern sind zwangsläufig auch mit den 3D-Daten der Ebene verbunden, auf dem sich das Zielobjekt befindet, d.h. mit den 3D-Daten desjenigen Teils des Palettenbodens, auf dem das Zielobjekt oder das Ladungsteil abgelegt ist.

Das in der EP 3 232 404 A1 beschriebene Verfahren ist nun insbesondere darauf gerichtet, diejenigen 3D-Daten des Zielobjektes zu identifizieren, die Ebenen innerhalb des Zielobjektes beschreiben und danach aus dieser Menge die 3D-Daten zu entfernen bzw. herauszurechnen, welche die Ebene des Palettenbodens beschreiben. Verfahrensgemäß soll das die Bestimmung des vom Zielobjekt eingenommenen Raums erleichtern. Für eine Bestimmung mehrerer Objekte innerhalb eines Laderaums ist dieses Verfahren jedoch weniger geeignet, da gerade die Position der Objekte untereinander weniger gut bestimmt werden kann.

Aus der DE102006028627A1 ist ein Verfahren zur Laderaumüberwachung bei einem Lkw bekannt, bei dem Bildinformationen des Fahrzeugs und der Ladung mittels eines optischen Sensors erfasst und anhand eines Differenzbildverfahrens ausgewertet werden. Das bei der Auswertung gewonnene Differenzbild des Fahrzeugs bzw. der Ladung wird sodann auf einer Anzeigeeinheit im Fahrzeuginnenraum dargestellt.

Aus der EP3401217A1 ist ein automatisches Beladungssystem für Flugzeuge bekannt. Mit Lidar-Sensoren werden die geladenen Objekte überprüft und bei Erkennung, dass es sich nicht um einen ULD-Container handelt, wird ein Alarm ausgegeben.

Aus der US2019/114577A1 ist ein System zur Messung und Optimierung der Laderaumnutzung bekannt.

Die Aufgabe der vorliegenden Erfindung bestand demnach in der Bereitstellung eines verbesserten Verfahrens zur Überwachung von Laderäumen, mit dem nicht nur die im Laderaum befindlichen Objekte oder Ladungsteile als solche bestimmt und vermessen werden können, sondern welches es auch ermöglicht, den Ort der Objekte und die Veränderung des Ortes solcher Objekte innerhalb des Laderaums bestimmen zu können. Weiterhin bestand die Aufgabe darin, ein Verfahren bereitzustellen, welches ohne einen zu umfangreichen Eingriff auf andere umgebende Systeme anzuwenden ist, welches ausreichend sichere Ergebnisse zur Bestimmung und Überwachung eines Laderaums liefert und welches für beliebig ausgebildete Laderäume einsetzbar ist.

Gelöst wird diese Aufgabe durch die Merkmale des Hauptanspruchs. Weitere vorteilhafte Ausbildungen sind in den Unteransprüchen offenbart. Ebenfalls offenbart ist eine Einrichtung zur Durchführung des Verfahrens sowie ein Fahrzeug mit Laderaum.

Dabei wird das Innere des Laderaums mit mindestens einem abstandsmessenden, tiefenempfindlichen Sensor (*depth-aware sensor*) dreidimensional vermessen. Dazu werden einen jeden Messpunkt den Laderaum begrenzender dreidimensionaler Oberflächen beschreibende 3D-Daten sowie einen jeden Messpunkt etwaiger im Laderaum befindlicher Objekte oder Ladungsteile beschreibende 3D-Daten als eine erste Datenmenge (3D-Punktwolke) gespeichert und mit einem Zeitstempel versehen. Danach erfolgt dann mit Hilfe des Sensors mindestens eine nachfolgende, entsprechende dreidimensionale Vermessung, wobei auch bei dieser nachfolgenden Vermessung
die entsprechenden Messpunkte beschreibende 3D-Daten als eine zugehörige zweite Datenmenge gespeichert und ebenfalls mit einem Zeitstempel versehen werden. Das Zahlwort "zweite" ist hier zu verstehen als "jede weitere" im Sinne jeder sich wiederholenden nachfolgenden Vermessung

Die Vermessungen mit dem abstandsmessenden, tiefenempfindlichen Sensor können dabei periodisch erfolgen, was in Hinblick auf eine kontinuierliche Zustandsermittlung vorteilhaft ist, sie können aber auch in unregelmäßigen Zeitabständen oder je nach Bedarf erfolgen.

Mittels eines Algorithmus in einer Rechen- oder Auswerteeinheit werden nach der jeweils nachfolgenden Vermessung die 3D-Daten von Messpunkten oder Messpunktmengen der ersten Datenmenge mit jeweils örtlich korrespondierenden Messpunkten oder Messpunktmengen der zweiten Datenmenge verglichen, wobei für den Fall, dass bei dem Vergleich der 3D-Daten örtlich korrespondierender Messpunkte oder Messpunktmengen der ersten und zweiten Datenmenge Änderungen der 3D-Daten ermittelt werden, die örtlich innerhalb des Laderaums liegen, zunächst eine Vertrauensstärke und Vollständigkeit der geänderten 3D-Daten der zweiten Datenmenge mit Hilfe des Algorithmus berechnet und entsprechend indiziert werden.

Danach wird ein die ermittelten Änderungen beschreibendes weiter verarbeitbares Signal bereitgestellt und/oder daraus 3D-Daten für eine visuelle Darstellung des Laderaums, einer örtlichen Zuordnung der Ladungsteile im Laderaum und eines aktuellen Beladungszustands erzeugt, insbesondere zur Darstellung auf einem Monitor oder einem Anzeigegerät.

Die so ermittelten und gespeicherten 3D-Daten beinhalten vorteilhafterweise die Parameter der im Laderaum befindlichen Objekte oder Ladungsteile insbesondere in Hinblick auf jeweils ihre Position und ihre Abmessungen, insbesondere Längen, Breite, Höhe und Tiefe, so dass dann sowohl die Vermessung der Ladungsteile als auch die Vermessung des Laderaums bzw. die Vermessung der den Laderaum begrenzenden Flächen ermöglicht wird. Die 3D-Daten repräsentieren dabei sogenannte Tiefendaten (*depth data*), nämlich die "Tiefen" oder in anderen Worten die Abstände der entsprechenden Messpunkte vom Sensor. Auf diese Weise kann man die Abstände jeder detektierten Fläche eines Objekts vom Sensor und damit ihre Position erkennen. Eine Wiederholung der Messung erlaubt es, die Veränderung dieser Daten festzustellen und so in dem Fall, dass tatsächlich eine solche Veränderung nach einer bestimmten Zeit oder einer Anzahl von Vermessungen festgestellt wird, auf die Veränderung der Objekte oder Ladungsteile innerhalb des Laderaums zu schließen.

Das bereitgestellte weiter verarbeitbare Signal kann dabei natürlich auch sämtliche aus den 3D-Daten berechneten Parameter enthalten, etwa die, die jeweils Position und Abmessungen von Objekten oder Ladungsteilen beschreiben.

Die 3D-Daten können auch als Grundlage für weitere Modellrechnungen oder auch für die Erzeugung von Videodaten genutzt werden, die dann auf einem Monitor darstellbar sind und ein dreidimensionales Bild ergeben, welches den aktuellen Ladungszustand darstellt. Die Daten oder deren Aufarbeitung können über Kommunikationseinrichtungen etwa an die Zentrale einer Spedition gesendet werden oder auch an Behörden, deren Aufgabe es ist, die Ladung und insbesondere fehlerhafte Ladung oder Überladung zu kontrollieren.

Vorteilhafterweise werden während oder bei der dreidimensionalen Vermessung der im Laderaum befindlichen Objekte oder Ladungsteile deren Parameter als 3D-Daten in jeweiligen den Objekten oder Ladungsteilen zuzuordnenden 3D-Datenmengen gespeichert, so genannten 3D-Datenclustern oder 3D-Punkt-Clustern. Solche Datenmengen oder auch Punkt-Cluster können beispielsweise an ihrer Eigenschaft, charakteristischen Geometrien zu beschreiben, d. h. anhand der ihre Position in einem Koordinatensystem beschreibenden Daten erkannt und als Muster für weitere Berechnungen betrachtet werden, sodass eine schnelle und einfache Zuordnung von Veränderungen möglich wird.

Eine besonders vorteilhafte Weiterbildung zur Klassifizierung von detektierten Änderungen besteht darin, dass mit Hilfe des Algorithmus die geänderten 3D-Daten den nachfolgend beschriebenen bedingten Prüfungen unterzogen und entsprechenden Vorkommnissen zugeordnet werden, nämlich:
a) Sofern die Änderung der 3D-Daten im Vergleich zur vorlaufenden Vermessung
   - 3D-Daten aufweist, die zuvor nicht erfasste Objekte oder Ladungsteile beschreiben,
   - an örtlich korrespondierenden Messpunkten oder Messpunktmengen,
   wird auf das Vorkommnis (a) "Zuladung/Hinzufügen eines Objekts oder Ladungsteils" erkannt, d.h. bisher nicht bekannte Parameter/Daten sind an einem Ort vorhanden, an dem sie vorher nicht gemessen wurden.
b) Sofern die Änderung der 3D-Daten im Vergleich zur vorlaufenden Vermessung
   - 3D-Daten aufweist, die zuvor bereits erfasste Objekte oder Ladungsteile beschreiben,
   - an örtlich nicht korrespondierenden Messpunkten oder Messpunktmengen,
   wird auf das Vorkommnis (b) "Verlagerung eines Objekts oder Ladungsteils" erkannt, d.h. gleiche Parameter/Daten sind an einem anderen Ort vorhanden oder sind dort wiedergefunden.
c) Sofern die Änderung der 3D-Daten im Vergleich zur vorlaufenden Vermessung
   - 3D-Daten nicht mehr aufweist, die zuvor bereits erfasste Objekte oder Ladungsteile beschreiben,
   - an örtlich korrespondierenden Messpunkten oder Messpunktmengen,
   wird auf das Vorkommnis (c) "Ladungsteil oder Objekt entfernt" erkannt, d.h. Parameter/Daten, die bei der vorlaufenden Vermessung an einem Ort vorhanden waren, sind nicht mehr existent.

Je nach Vorkommnis (a, b, c) wird ein entsprechendes weiter verarbeitbares Signal bereitgestellt und/oder 3D-Daten für eine visuelle Darstellung des Laderaums, der örtlichen Zuordnung der Ladungsteile im Laderaum und des aktuellen Beladungszustands werden erzeugt, insbesondere zur Darstellung auf einem Monitor oder einem Anzeigegerät.

Die Bezeichnung "örtlich korrespondierende Messpunkte oder Messpunktmengen" beschreibt dabei die Messpunkte innerhalb des vermessenen Raums (Laderaum), die dieselbe örtliche Position beschreiben bzw. einnehmen wie bei der vorlaufenden Messung, also denselben Ort im dreidimensionalen Koordinatensystem kennzeichnen.

Grundlegend für eine solche bedingte Prüfung ist die fortlaufende Feststellung, ob bei dem Vergleich der 3D-Daten örtlich korrespondierender Messpunkte oder Messpunktmengen der ersten und zweiten Datenmenge die ermittelten Änderungen der 3D-Daten örtlich innerhalb des Laderaums liegen.

Dies gestaltet sich relativ einfach, da die 3D-Daten der Begrenzungsflächen des Laderaums, also Boden, Seitenwände und Decke, wie oben dargestellt, ebenfalls in identifizierbaren 3D-Clustern gespeichert und somit für alle weiteren Messungen bekannt und "gesetzt" sind. Diese Information wird dann genutzt, um auf einfache Weise zwischen 3D-Daten, die den Laderaum als solchen beschreiben, und 3D-Daten, die die Ladungsteile oder Objekte beschreiben, zu unterscheiden.

Vorteilhafterweise wird der Nullpunkt des Koordinatensystems in eine dem Sensor gegenüberliegende Ecke des Laderaums gesetzt. Der Sensor ist dazu vorteilhaft an einer mit einer Ladeöffnung versehenen Wand eines Laderaums angeordnet und so auf die gegenüberliegende Wand gerichtet, dass der Messbereich des Sensors den gesamten Laderaum umfasst, wobei der Nullpunkt der dreidimensionalen Vermessungen in eine Ecke des Laderaums kalibriert wird. Natürlich kann auch jeder andere Punkt als Nullpunkt des Koordinatensystems verwendet werden. Bei einer solchen Sensoranordnung befindet sich der gesamte Laderaum bis zur Vorderwand dann im Messbereich, welcher auch nicht ohne Weiteres durch etwa vorgestellte Objekte oder Ladungsteile behindert werden kann.

Eine weitere vorteilhafte Ausbildung des Verfahrens besteht darin, dass bei einer Änderung gemäß Vorkommnis (a), (b) oder (c) die Menge der geänderten 3D-Daten als Untermenge oder 3D-Daten-Cluster klassifiziert und mit einer Kennzeichnung mindestens zur Identifikation, zur örtlichen Bestimmung und zur Bestimmung der Parameter des durch die Untermenge beschriebenen Objekts oder Ladungsteils versehen wird.

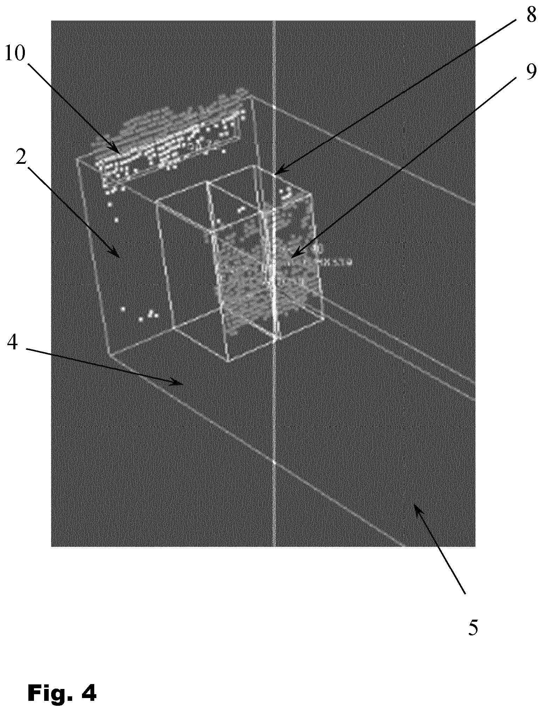

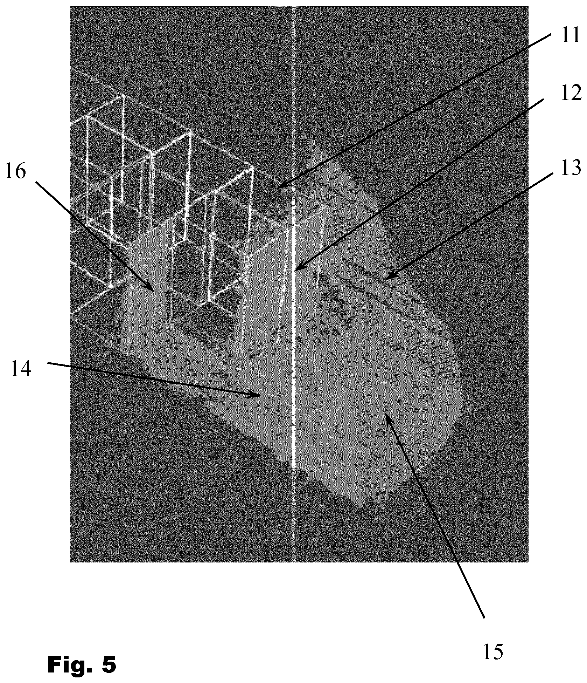

In diesem Zusammenhang ergibt sich eine weitere vorteilhafte Ausbildung des Verfahrens dadurch, dass bei einer Änderung gemäß Vorkommnis (a), (b) oder (c) die Untermengen oder 3D-Daten-Cluster mit weiteren 3D-Daten-Clustern aus der umgebenden örtlichen Nachbarschaft verglichen und danach klassifiziert und mit einer Kennzeichnung versehen werden. Für den Fall nämlich, dass Messpunkte nicht in ausreichender Zahl vorhanden sind oder dass der Sensor z.B. aufgrund einer Konstellation anderer Ladungsteile nicht in der Lage ist, ausreichend Messpunkte zu finden, können aus vorlaufenden oder mehreren nacheinander folgenden Vermessungen vorhandene ähnliche Daten in der Nachbarschaft überprüft werden. Beispielsweise können gleich ausgerichtete Oberflächen, die aber in unterschiedlichen Abständen vom Sensor ermittelt werden, darauf schließen lassen, dass ein weiteres Objekt vor ein bereits bestehendes Objekt gestellt worden ist. Solche Oberflächen können Vorderseiten von Beladungsteilen darstellen oder Wände des Laderaums. Zur Vereinfachung wird bereits jetzt auf die Fig. 4 und 5 und die entsprechende Figurenbeschreibung verwiesen.

Nach diesem Verfahren kann also festgestellt werden, ob ein Objekt oder Ladungsteil im Laderaum hinzugefügt wurde, entfernt wurde oder von seinem ursprünglichen Platz an einen anderen Platz im Laderaum gebracht wurde. Neue Objekte oder Ladungsteile, die innerhalb des Laderaums zugefügt wurden, erhalten dann wiederum ihre zugehörigen bei weiteren Messungen identifizierbaren 3D-Datencluster.

Dabei ist es vorteilhaft, wenn auch die zu den Messpunkten oder Messpunktmengen gehörigen 3D-Daten der den Laderaum begrenzenden dreidimensionalen Oberflächen als gekennzeichnete und identifizierbare 3D-Datencluster als Systemgrenzen für jeden Vergleich zwischen vorlaufender "erster" und nachfolgender "zweiter" Datenmenge festgelegt werden.

Eine weitere vorteilhafte Ausbildung besteht darin, dass der Sensor als optischer Tiefen-Sensor ausgebildet ist, vorzugsweise als Time-of-Flight-Kamera (TOF-Kamera) oder Stereokamera. Eine TOF-Kamera liefert beispielsweise für jeden Bildpunkt die Entfernung des auf den Bildpunkt abgebildeten Objektes. Dabei kann eine ganze Szene auf einmal aufgenommen werden, ohne dass einzeln abgetastet werden muss, was natürlich zu einer schnelleren Verarbeitung der entsprechenden Signale führt. Es ist je nach Anwendung ebenfalls vorteilhaft, wenn der Sensor als LiDAR-Sensor (*light imaging, detection and ranging*) oder Laser-Scanner (*light amplification by stimulated emission of radiation*) ausgebildet ist, der für eine gerasterte Abtastung eine preiswertere Alternative darstellt. Diese Systeme als solche sind bekannt.

Eine weitere vorteilhafte Ausbildung besteht darin, dass eine Vertrauensstärke und Vollständigkeit der geänderten 3D-Daten der zweiten Datenmenge überprüft wird, und/oder ein Schwellenwert für ein Rauschen bei der Vermessung oder Klassifizierung festgelegt wird.

Das kann beispielsweise dadurch erfolgen, dass der zeitliche Änderungsverlauf der die Abstände von Messpunkten oder Messpunktmengen kennzeichnenden Messwerte ausgewertet wird. Aus der zeitlichen Historie kann anhand von Grenzwerten oder Vorkommnissen/Auftreten ermittelt werden, ob zum Beispiel ein erwarteter Messwert, also das Auftreten eines durch 3D-Daten beschriebenen Messpunktes in einem bestimmten Erwartungsbereich, d.h. in einer bestimmten Entfernung, etwa erst nach Überschreitung einer Zeit-Schwelle erfolgt oder nur für einen kurzen Zeitraum auftritt und dann wieder verschwindet, also nicht stabil verbleibt.

Durch die beschriebene dreidimensionale Vermessung des Laderaums ist also jeweils der augenblicklich ermittelte Zustand und der bei der fortlaufenden Messung ermittelte frühere Zustand bekannt und somit auch die Parameter der entsprechenden Objekte oder Ladungsteile, nämlich ihre Tiefe (Abstand vom Sensor), ihre Breite, ihre Höhe, ihre Position und ihr Volumen.

Indem man die aktuell ermittelten 3D-Daten eines 3D-Clusters mit den bereits existierenden 3D-Cluster-Informationen vergleicht und zusätzliche Prüfungen dahingehend durchführt, ob etwa die 3D-Daten eine Mindestqualität oder -stabilität haben, oder etwa nicht ausreichend oft in einem Erwartungsbereich auftauchen, erkennt man auch, ob etwa der Sensor nicht in der Lage war, bestimmte Bereiche zu vermessen. Gleichermaßen kann man damit die 3D-Daten der Umgebung der jeweiligen Messpunkte analysieren und mit den laufenden Daten vergleichen.

Eine weitere vorteilhafte Ausbildung besteht darin, dass eine visuelle Darstellung des Laderaums, der örtlichen Zuordnung der Objekte oder Ladungsteile im Laderaum und des aktuellen Beladungszustands in Form eines dreidimensionalen Ladungsbildes auf einem Monitor dargestellt werden, vorzugsweise unter Darstellung nur der vom Sensor aus sichtbaren Flächen. Eine entsprechende rechnerische Aufarbeitung der 3D-Daten liefert dann einfach zu interpretierende Bilder auf einem Monitor, die eine sehr schnelle und intuitive Beurteilung durch eine die Ladung kontrollierende Person erlauben.

Eine weitere vorteilhafte Ausbildung besteht darin, dass die periodische Vermessung der 3D-Daten eines jedes Messpunktes vorzugsweise mit einer Frequenz von 1 Hz (einmal pro Sekunde) erfolgt. Eine solche periodische Überprüfung ist ausreichend dynamisch für die Überwachung eines Laderaums bei Ladevorgängen oder anderen Kontrollvorgängen.

Eine weitere vorteilhafte Ausbildung besteht darin, dass aus den 3D-Daten, welche die Parameter, d.h. die Breite, Höhe und Tiefe jedes einzelnen im Laderaum befindlichen Objekts oder Ladungsteils beschreiben, der Flächenbedarf und/oder die Volumina der Objekte oder Ladungsteile ermittelt und/oder in Verhältnis zur vorhandenen Laderaumfläche oder zum vorhandenen Volumen des Laderaums bestimmt werden. Dann lässt sich z.B. aus der Summe aller berechneten Volumina aller Objekte das belegte Gesamtvolumen berechnen und somit auch das noch freies Volumen im Laderaum bestimmen. Dasselbe gilt für die Berechnung der von allen Objekten belegten Gesamtflächen im Verhältnis zu der noch freien, nicht belegten Fläche. Die Relevanz solcher Bestimmungen für die Ladungsplanung von z.B. Flottenbetreibern oder Speditionen ist sofort einzusehen.

Eine weitere vorteilhafte Ausbildung besteht darin, dass das weiter verarbeitbare Signal zur Speicherung in Datenverarbeitungssystemen, insbesondere zur Nutzung in Steuerungseinrichtungen und zur Verwendung und Verarbeitung innerhalb eines Daten-Kommunikationssystems bereitgestellt wird. So können über eventuell verbundene, in dem zum Laderaum gehörigen Fahrzeug vorhandene weitere Funkeinrichtungen Signale, die den Ladungszustand repräsentieren, auch an die Zentrale einer Spedition oder eines Flottenbetreibers gesendet werden.

Darüber hinaus ist eine Einrichtung offenbart, welche zur Überwachung eines Laderaums und zur Durchführung des erfindungsgemäßen Verfahrens geeignet ist. Dabei weist die Einrichtung mindestens einen abstandsmessenden, tiefenempfindlichen Sensor zur periodisch wiederholten, dreidimensionalen Vermessung des Laderaums auf, sowie eine Rechen- oder Auswerteeinheit mit einem programmierten Algorithmus. Mittels der so vorgesehenen Rechen- oder Auswerteeinheit und des Algorithmus werden die 3D-Daten eines jeden Messpunkts der den Laderaum begrenzenden dreidimensionalen Oberflächen sowie die 3D-Daten eines jeden Messpunktes etwaiger im Laderaum befindlicher Objekte oder Ladungsteile durch wiederholte Vermessung ermittelt, als Datenmengen (3D-Punktwolke) gespeichert und nach dem erfindungsgemäßen Verfahren miteinander verglichen und bei ermittelten Änderungen wird ein verarbeitbares Signal bereitgestellt. Der Vorteil dabei liegt in der Verwendbarkeit und/oder Bereitstellung einer solchen Einrichtung für beliebige Laderäume, also zum Beispiel für Laderäume von LKW, aber auch für Lade-Container von Schiffen oder anderen Fahrzeugen.

Das erfindungsgemäße Verfahren und die dazu besonders geeignete Einrichtung ist in besonderer Weise für ein Fahrzeug mit einem Laderaum geeignet, beispielsweise für einen Lastkraftwagen, ein Anhängefahrzeug oder einen Wagenzug. Auch die Anwendung bei Containern, die in anderen Fahrzeugen transportiert werden, ist sehr gut möglich. Dabei weisen das jeweilige Fahrzeug bzw. der Container einen Laderaum auf, der mit mindestens einem im Inneren des Laderaums vorgesehenen, abstandsmessenden tiefenempfindlichen Sensor zur dreidimensionalen Vermessung versehen ist, wobei das Fahrzeug weiterhin eine Rechen- oder Auswerteeinheit mit einem programmierten Algorithmus aufweist, mit dem die vom Sensor erfassten 3D-Daten eines jedes Messpunktes in einer ersten Datenmenge (3D-Punktwolke) gespeichert, nach dem erfindungsgemäßen Verfahren verarbeitet und mit mindestens einer zweiten Datenmenge verglichen werden.

Anhand eines Ausführungsbeispiels soll die Erfindung näher erläutert werden. Es zeigen
- Fig. 1: skizzenhaft einen Blick in das Innere eines Laderaums,
- Fig. 2: eine Monitor-Darstellung einer örtlichen Anordnung/Zuordnung der Ladungsteile im Laderaum nach dem erfindungsgemäßen Verfahren,
- Fig. 3: eine Monitor-Darstellung einer weiteren örtlichen Anordnung/Zuordnung der Ladungsteile im Laderaum nach dem erfindungsgemäßen Verfahren,
- Fig. 4: eine Monitor-Darstellung einer örtlichen Anordnung/Zuordnung der Ladungsteile im Laderaum nach einem erfindungsgemäßen Vergleich mit 3D-Daten-Clustern aus der umgebenden örtlichen Nachbarschaft,
- Fig. 5: eine Monitor-Darstellung einer weiteren örtlichen Anordnung/Zuordnung der Ladungsteile im Laderaum nach einem erfindungsgemäßen Vergleich mit 3D-Daten-Clustern aus der umgebenden örtlichen Nachbarschaft

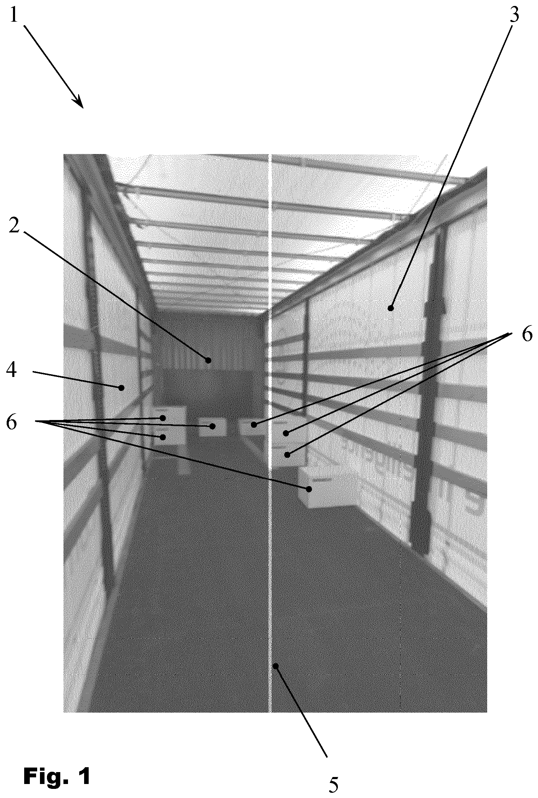

Fig. 1 zeigt skizzenhaft einen Blick in das Innere eines Laderaums 1, nämlich von seiner hinteren Ladebordwand aus in Blickrichtung auf die vordere Wand 2. Man erkennt die rechte Begrenzungswand 3, die linke Begrenzungswand 4, die Ladefläche bzw. den Boden 5 und die vordere Begrenzungswand 2. Ebenfalls erkennbar sind verschiedene Objekte, nämlich verschiedene auf dem Laderaumboden 5 verteilte Ladungsteile 6. Es handelt sich hier um den Laderaum eines LKW, dessen Ladefläche mit einem Gerüst aus Streben und Latten versehen ist, welches mit einer Plane überdeckt ist.

Ein abstandsmessender Sensor, z. B ein TOF-Sensor, hier nicht näher dargestellt, befindet sich in einer oberen Ecke der hinteren Ladebordwand des Laderaums 1.

Dieser Ort ist besonders gut geeignet für die Anordnung eines solchen Sensors, da der gesamte Laderaum bis zur Vorderwand sich dann im Messbereich des Sensors befindet und der Messbereich auch nicht durch vorgestellte Objekte oder Ladungsteile behindert wird, solange natürlich ein fachgerechtes Verstauen der Ladung immer bis in die Tiefe des Laderaums erfolgt.

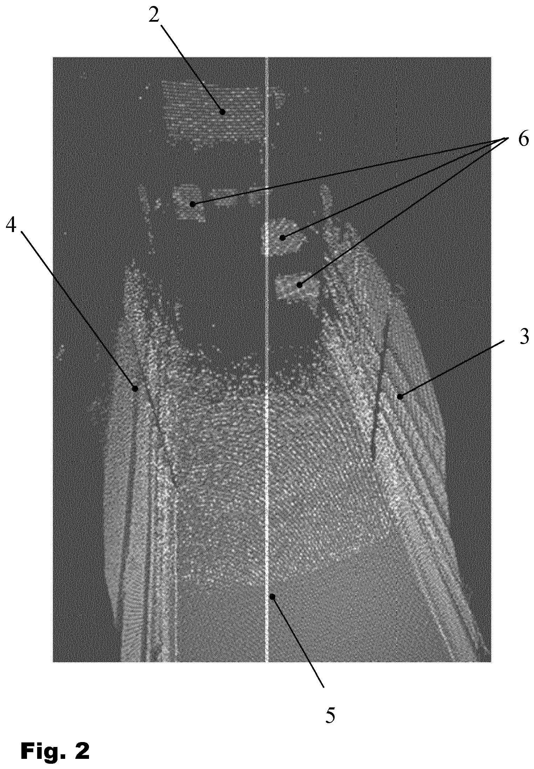

Fig. 2 zeigt eine Monitor-Darstellung, bei der für einen Zustand nach Fig. 1 das mit Hilfe des erfindungsgemäßen Verfahrens nach Ermittlung der Änderungen erzeugte Signal für eine visuelle Darstellung des Laderaums genutzt wird. Eine entsprechende rechnerische Aufarbeitung der 3D-Daten liefert dann die hier gezeigten Bilder, welche die örtliche Anordnung und Zuordnung der Ladungsteile im Laderaum und den aktuellen Beladungszustands erkennen lassen. Der Nullpunkt der dreidimensionalen Vermessungen wurde hier in die rechte untere Ecke der Vorderwand 2 des Laderaums 1 gelegt. Natürlich kann auch jeder andere Punkt als Nullpunkt des Koordinatensystems verwendet werden.

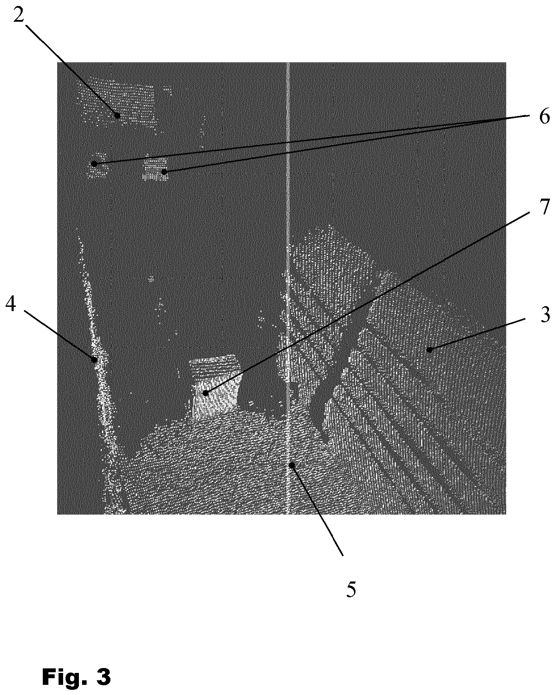

Dasselbe gilt grundsätzlich für die Darstellungen gemäß Fig. 3 bis 5, die jedoch andere als in der Fig. 1 dargestellte Konstellationen von Objekten beschreiben und zur Verdeutlichung teilweise umgerechnet sind auf anders gewinkelte dreidimensionale Darstellungen.

Fig. 2 zeigt hier also den Zustand des Laderaums gemäß Fig. 1, jedoch dargestellt mithilfe der zu einem Monitor- oder Video-Signal verarbeiteten 3D-Daten, die aus dem mithilfe des erfinderischen Verfahrens ermittelten Signals aufbereitet wurden. Erkennbar sind hier ebenfalls die rechte Begrenzungswand 3, die linke Begrenzungswand 4, die Ladefläche bzw. den Boden 5 und die vordere Begrenzungswand 2. Ebenfalls erkennbar sind die verschiedenen Objekte bzw. auf dem Laderaumboden 5 verteilten Ladungsteile 6. Gut erkennt man, dass die hier zur Vermessung verwendete TOF-Kamera eine Empfindlichkeit aufweist, die auch die aus Streben und Latten bestehende Tragkonstruktion für die Plane erkennen lässt. Man sieht also im Grunde eine Darstellung der Messpunkte, für die ein Tiefensignal und 3D-Daten mit Hilfe des Sensors erfassbar sind.

Fig. 3 zeigt nun eine im Vergleich zu der Darstellung gemäß Fig. 2 veränderte Situation. Hier wurden die in einer nachfolgenden Vermessung ermittelten 3D-Daten mit Hilfe des Algorithmus bedingten Prüfungen unterzogen und Änderungen festgestellt, nämlich der Fall (a) festgestellt, dass eine Änderung der 3D-Daten im Vergleich zur vorlaufenden Vermessung (Fig. 2) vorliegt. Hier liegen 3D-Daten von zuvor nicht erfassten Objekten oder Ladungsteilen an örtlich korrespondierenden Messpunkten oder Messpunktmengen vor, an denen bei vorlaufenden Messungen solche Daten nicht vorhanden waren. Damit wird hier erfindungsgemäß erkannt, dass ein neues Objekt oder Ladungsteil 7 hinzugefügt wurde, also eine "Zuladung" erfolgte.

Man erkennt hier deutlich, dass das hinzugefügte Objekt bzw. Ladungsteil 7 an einer Stelle steht, an der bei der vorigen Vermessung, verdeutlicht durch die Fig. 2, lediglich die 3D-Daten für die untere Begrenzungsfläche des Laderaums, nämlich die 3D-Daten des Laderaumbodens, vorhanden waren.

Fig. 4 zeigt eine Monitor-Ansicht für einen Fall, bei dem trotz mangelnder Vollständigkeit von 3D-Daten einer Datenmenge das Vorhandensein eines Objektes ermittelt werden konnte. Erfindungsgemäß wurde hier anhand der 3D-Daten die Position sowie Breite, Höhe und Tiefe ermittelt und anhand von Gitterlinien dargestellt, die sowohl den Umriss des Laderaums mit Seitenwänden, Laderaumboden und Vorderwand, als auch die Umrisse eines im Laderaum hinzugefügten neuen Ladungsteils 8 skizzieren.

Man sieht deutlich, dass lediglich Messpunkte 9 auf der Vorderseite des neuen Ladungsteils 8 vom Sensor gemessen werden konnten, also lediglich Messpunkte auf der "Sichtseite" des Sensors, während auf der Oberseite und auf der Seitenfläche des neuen Ladungsteils 8 offensichtlich keinerlei Messdaten zur Verfügung standen.

Man erkennt aber ebenfalls, dass die rückseitige, also zum Sensor gewandte Oberfläche der Vorderwand 2 des Laderaums vom Sensor erfasst worden ist und dass dort Messpunkte 10 zur Verfügung gestanden haben, die hier in dieser Darstellung der Fig. 4 zu 3D-Daten und anschließend in Video-Daten umgewandelt worden sind.

Hier erfolgt nun mit dem erfindungsgemäßen Verfahren ein Vergleich der 3D-Datencluster der aktuellen Messung mit den 3D-Datenclustern in örtlicher Nachbarschaft, die bei der vorherigen oder einer der vorlaufenden Messungen ermittelt wurden.

Das erfindungsgemäße Verfahren ist mithilfe des Algorithmus in der Lage, lediglich aus der Differenzbildung der 3D-Daten dieser beiden benachbarten Sichtflächen, also aus einem speziellen Vergleich zwischen vorlaufend ermittelten Daten und aktuellen Daten, in ausreichender Weise auf das Vorhandensein eines weiteren Ladungsteils 8 zu schließen.

Eine ähnliche Ermittlung von Ladungsteilen durch Vergleich zwischen 3D-Daten für Messpunkte, die in einer vorherigen und einer nachfolgenden Vermessung durch den Sensor aufgenommen und einem anschließenden erfindungsgemäßen Vergleich zugeführt wurden, zeigt der Vollständigkeit halber noch einmal die Fig. 5. Dort liefert ein neues Ladungsteil 11 ebenfalls nur auf seiner Vorderseite Messpunkte bzw. Messwerte 12, welche vom Sensor erkannt werden. Anhand eines Vergleichs nach dem erfinderischen Verfahren mit den vorher aufgenommenen 3D-Daten der Wände (Messdaten 13, 14), des Bodens (Messdaten 15) und der Vorderwand von weiteren Ladungsteilen, von denen Messwerte 16 erfassbar sind, kann auf das Vorhandensein des Ladungsteils 11 geschlossen werden.

### Bezugszeichenliste

### (Teil der Beschreibung)

- 1: Laderaum eines LKW
- 2: vordere Wand des Laderaums
- 3: rechte Begrenzungswand des Laderaums
- 4: linke Begrenzungswand des Laderaums
- 5: Ladefläche/Laderaumboden
- 6: Ladungsteil/Objekt
- 7: Ladungsteil/Objekt
- 8: Ladungsteil/Objekt
- 9: Messpunkte auf der Vorderseite des Ladungsteils 8
- 10: Messpunkte auf der vorderen Wand 2
- 11: Ladungsteil/Objekt
- 12: Messpunkte auf der Vorderseite des Ladungsteils 11
- 13: Messpunkte auf der rechten Laderaumwand
- 14: Messpunkte auf der linken Laderaumwand
- 15: Messpunkte auf der Ladefläche

## Patentansprüche

1. Verfahren zur Überwachung eines Laderaums (1), bei dem das Innere des Laderaums (1) mit mindestens einem abstandsmessenden, tiefenempfindlichen Sensor dreidimensional vermessen wird, wobei
- einen jeden Messpunkt den Laderaum begrenzender dreidimensionaler Oberflächen beschreibende 3D-Daten sowie
- einen jeden Messpunkt etwaiger im Laderaum befindlicher Objekte oder Ladungsteile (6, 7, 8, 11) beschreibende 3D-Daten
als eine erste Datenmenge (3D-Punktwolke) gespeichert und mit einem Zeitstempel versehen werden, wobei mit Hilfe des Sensors mindestens eine weitere, nachfolgende dreidimensionale Vermessung durchgeführt und die entsprechenden Messpunkte beschreibende 3D-Daten als eine zugehörige zweite Datenmenge gespeichert und ebenfalls mit einem Zeitstempel versehen werden,
- wobei mittels eines Algorithmus in einer Rechen- oder Auswerteeinheit nach der jeweils nachfolgenden Vermessung die 3D-Daten von Messpunkten oder Messpunktmengen der ersten Datenmenge mit jeweils örtlich korrespondierenden Messpunkten oder Messpunktmengen der zweiten Datenmenge verglichen werden,
- wobei für den Fall, dass bei dem Vergleich der 3D-Daten örtlich korrespondierender Messpunkte oder Messpunktmengen der ersten und zweiten Datenmenge Änderungen der 3D-Daten ermittelt werden, die örtlich innerhalb des Laderaums liegen, zunächst eine Vertrauensstärke und Vollständigkeit der geänderten 3D-Daten der zweiten Datenmenge mit Hilfe des Algorithmus berechnet und entsprechend indiziert werden,
wonach ein die ermittelten Änderungen beschreibendes weiter verarbeitbares Signal bereitgestellt und/oder daraus 3D-Daten für eine visuelle Darstellung des Laderaums (1), einer örtlichen Zuordnung der Objekte oder Ladungsteile (6, 7, 8, 11) im Laderaum und eines aktuellen Beladungszustands erzeugt werden, insbesondere zur Darstellung auf einem Monitor oder einem Anzeigegerät, bei dem zur Klassifizierung der Änderungen mit Hilfe des Algorithmus die geänderten 3D-Daten folgenden bedingten Prüfungen unterzogen und entsprechenden Vorkommnissen zugeordnet werden:
a) sofern die Änderung der 3D-Daten im Vergleich zur vorlaufenden Vermessung
• 3D-Daten aufweist, die zuvor nicht erfasste Objekte oder Ladungsteile (6, 7, 8, 11) beschreiben,
• an örtlich korrespondierenden Messpunkten oder Messpunktmengen,
wird auf das Vorkommnis (a) "Zuladung/Hinzufügen eines Objekts oder Ladungsteils" erkannt,
b) sofern die Änderung der 3D-Daten im Vergleich zur vorlaufenden Vermessung
• 3D-Daten aufweist, die zuvor bereits erfasste Objekte oder Ladungsteile (6, 7, 8, 11) beschreiben,
• an örtlich nicht korrespondierenden Messpunkten oder Messpunktmengen,
wird auf das Vorkommnis (b) "Verlagerung eines Objekts oder Ladungsteils" erkannt,
c) sofern die Änderung der 3D-Daten im Vergleich zur vorlaufenden Vermessung
• 3D-Daten nicht mehr aufweist, die zuvor bereits erfasste Objekte oder Ladungsteile (6, 7, 8, 11) beschreiben,
• an örtlich korrespondierenden Messpunkten oder Messpunktmengen,
wird auf das Vorkommnis (c) "Ladungsteil oder Objekt entfernt" erkannt,
- wonach je nach Vorkommnis (a), (b) oder (c) ein entsprechendes weiter verarbeitbares Signal bereitgestellt und/oder 3D-Daten für eine visuelle Darstellung des Laderaums (1), eine örtliche Zuordnung der Objekte oder Ladungsteile (6, 7, 8, 11) im Laderaum (1) und eines aktuellen Beladungszustands erzeugt werden, insbesondere zur Darstellung auf einem Monitor oder einem Anzeigegerät.

2. Verfahren nach Anspruch 1, bei dem das Innere des Laderaums (1) periodisch dreidimensional vermessen wird.

3. Verfahren nach Anspruch 1 oder 2, bei dem während der dreidimensionalen Vermessung der im Laderaum (1) befindlichen Objekte oder Ladungsteile (6, 7, 8, 11) deren Parameter insbesondere in Hinblick auf ihre Position und jeweils ihre Breite, Höhe und Tiefe als 3D-Daten gespeichert werden, vorzugsweise in den jeweiligen Objekten oder Ladungsteilen (6, 7, 8, 11) zuzuordnenden 3D-Datenclustern.

4. Verfahren nach einem der vorhergehenden Ansprüche, bei dem bei einer Änderung gemäß Vorkommnis (a), (b) oder (c) die Menge der geänderten 3D-Daten als Untermenge oder 3D-Daten-Cluster klassifiziert und mit einer Kennzeichnung mindestens zur Identifikation, zur örtlichen Bestimmung und zur Bestimmung der Parameter des durch die Untermenge beschriebenen Objekts oder Ladungsteils (6, 7, 8, 11) versehen werden.

5. Verfahren nach Anspruch 4, bei dem bei einer Änderung gemäß Vorkommnis (a), (b) oder (c) die Untermengen oder 3D-Daten-Cluster mit weiteren 3D-Daten-Clustern aus der umgebenden örtlichen Nachbarschaft verglichen und danach klassifiziert und mit einer Kennzeichnung versehen werden.

6. Verfahren nach einem der vorhergehenden Ansprüche, bei dem der Sensor als optischer Tiefen-Sensor ausgebildet ist, vorzugsweise als Time-of-Flight-Kamera oder Stereokamera.

7. Verfahren nach einem der vorhergehenden Ansprüche, bei dem der Sensor als LiDAR-Sensor oder Laser-Scanner ausgebildet ist.

8. Verfahren nach einem der vorhergehenden Ansprüche zur Überwachung eines zu einem Fahrzeug gehörigen Laderaums (1), bei dem der Sensor an einer mit einer Ladeöffnung versehenen Wand des Laderaums (1) angeordnet ist, auf die gegenüberliegende Wand gerichtet ist und der Messbereich des Sensors den gesamten Laderaum umfasst, wobei Nullpunkt der dreidimensionalen Vermessungen in einer Ecke des Laderaums kalibriert wird.

9. Verfahren nach einem der vorhergehenden Ansprüche, bei dem die Vertrauensstärke und Vollständigkeit der geänderten 3D-Daten der zweiten Datenmenge überprüft wird und/oder ein Schwellenwert für ein Rauschen bei der Vermessung oder Klassifizierung festgelegt wird.

10. Verfahren nach einem der vorhergehenden Ansprüche, bei dem die Überprüfung, ob die Änderungen der 3D-Daten innerhalb des Laderaums (1) liegen, dadurch erfolgt, dass die zu den Messpunkten oder Messpunktmengen gehörigen 3D-Daten der den Laderaum (1) begrenzenden dreidimensionalen Oberflächen (2, 3, 4, 5) als gekennzeichnete und identifizierbare 3D-Datencluster als Systemgrenzen für jeden Vergleich zwischen vorlaufender "erster" und nachfolgender "zweiter" Datenmenge festgelegt werden.

11. Verfahren nach einem der vorhergehenden Ansprüche, bei dem eine visuelle Darstellung des Laderaums (1), der örtlichen Zuordnung der Objekte oder Ladungsteile (6, 7, 8, 11) im Laderaum (1) und des aktuellen Beladungszustands in Form eines dreidimensionalen Ladungsbildes auf einem Monitor dargestellt werden.

12. Verfahren nach einem der vorhergehenden Ansprüche, bei dem die periodische Vermessung der 3D-Daten eines jedes Messpunktes vorzugsweise mit einer Frequenz von 1 Hz (einmal pro Sekunde) erfolgt.

13. Verfahren nach einem der vorhergehenden Ansprüche, bei dem aus den die Breite, Höhe und Tiefe jedes einzelnen im Laderaum befindlichen Objekts oder Ladungsteils (6, 7, 8, 11) beschreibenden 3D-Daten ein Flächenbedarf und oder die Volumina der Objekte oder Ladungsteile (6, 7, 8, 11) ermittelt und/oder in Verhältnis zur vorhandenen Laderaumfläche oder zum vorhandenen Volumen des Laderaums (1) bestimmt werden.

14. Verfahren nach einem der vorhergehenden Ansprüche, bei dem das weiter verarbeitbare Signal zur Speicherung in Datenverarbeitungssystemen, insbesondere zur Nutzung in Steuerungseinrichtungen und zur Verwendung und Verarbeitung innerhalb eines Daten-Kommunikationssystems bereitgestellt wird.

15. Einrichtung zur Überwachung eines Laderaums (1) zur Durchführung des Verfahrens nach einem der vorhergehenden Ansprüche, wobei die Einrichtung mindestens einen abstandsmessenden, tiefenempfindlichen Sensor zur wiederholten, dreidimensionalen Vermessung des Laderaums (1) aufweist sowie eine Rechen- oder Auswerteeinheit mit einem programmierten Algorithmus, wobei mittels der Rechen- oder Auswerteeinheit und des Algorithmus
- die beschreibenden 3D-Daten eines jeden Messpunktes der den Laderaum begrenzenden dreidimensionalen Oberflächen sowie
- die beschreibenden 3D-Daten eines jeden Messpunktes etwaiger im Laderaum befindlicher Objekte oder Ladungsteile (6, 7, 8, 11)
jeder durch wiederholte Vermessung erhaltenen Datenmenge (3D-Punktwolke) mit dem Verfahren gemäß einem der vorhergehenden Ansprüche miteinander verglichen werden und bei ermittelten Änderungen ein verarbeitbares Signal bereitgestellt wird.

## Claims

1. Method for monitoring a loading area (1), in which the interior of the loading area (1) is three-dimensionally measured by means of at least one distance-measuring, depth-aware sensor, wherein
- 3D data describing each measurement point of three-dimensional surfaces delimiting the loading area and
- 3D data describing each measurement point of any objects or load parts (6, 7, 8, 11) located in the loading area
are stored as a first data set (3D point cloud) and assigned a time stamp, wherein by means of the sensor at least one further, subsequent three-dimensional measurement is carried out and 3D data describing the corresponding measurement points are stored as an associated second data set and also assigned a time stamp,
- wherein by means of an algorithm in a computing or analysis unit, after the respective subsequent measurement the 3D data of measurement points or measurement point sets of the first data set are compared with respectively spatially corresponding measurement points or measurement point sets of the second data set,
- wherein, in the event that changes in the 3D data located spatially within the loading area are identified from the comparison of the 3D data of spatially corresponding measurement points or measurement point sets of the first and second data sets, a confidence level and completeness of the changed 3D data of the second data set are first calculated and indexed accordingly using the algorithm,
after which a further processable signal describing the identified changes is provided and/or 3D data are generated therefrom for a visual representation of the loading area (1), a spatial allocation of the objects or load parts (6, 7, 8, 11) in the loading area and a current loading state, in particular for display on a monitor or a display device, in which to perform the classification of the changes by means of the algorithm, the changed 3D data are subjected to the following conditional tests and allocated to corresponding circumstances:
a) if the change in the 3D data compared to the preceding measurement
• comprises 3D data describing previously undetected objects or load parts (6, 7, 8, 11),
• at spatially corresponding measurement points or measurement point sets,
in response to circumstance (a) "Loading/adding of an object or load part" is detected,
b) if the change in the 3D data compared to the preceding measurement
• comprises 3D data describing previously already detected objects or load parts (6, 7, 8, 11),
• at spatially non-corresponding measurement points or measurement point sets,
in response to circumstance (b) "Relocation of an object or load part" is detected,
c) if the change in the 3D data compared to the preceding measurement
• no longer comprises 3D data describing previously already detected objects or load parts (6, 7, 8, 11),
• at spatially corresponding measurement points or measurement point sets,
in response to circumstance (c) "Load part or object removed" is detected,
- after which, depending on circumstance (a), (b) or (c), a corresponding further processable signal is provided and/or 3D data are generated for a visual representation of the loading area (1), a spatial allocation of the objects or load parts (6, 7, 8, 11) in the loading area (1) and a current loading state, in particular for display on a monitor or a display device.

2. Method according to Claim 1, in which the interior of the loading area (1) is periodically three-dimensionally measured.

3. Method according to Claim 1 or 2, in which, during the three-dimensional measurement of the objects or load parts (6, 7, 8, 11) located in the loading area (1), the parameters thereof are stored as 3D data, in particular with regard to their position and their respective width, height and depth, preferably in 3D data clusters to be allocated to the respective objects or load parts (6, 7, 8, 11).

4. Method according to any of the preceding claims, in which, in the event of a change according to circumstance (a), (b) or (c), the set of the changed 3D data is classified as a subset or 3D data cluster and assigned an identifier at least for identification, for spatial determination and for determining the parameters of the object or load part (6, 7, 8, 11) described by the subset.

5. Method according to Claim 4, in which, in the event of a change according to circumstance (a), (b) or (c), the subsets or 3D data clusters are compared with further 3D data clusters from the surrounding spatial neighbourhood and then classified and assigned an identifier.

6. Method according to any of the preceding claims, in which the sensor is designed as an optical depth sensor, preferably as a time-of-flight camera or stereo camera.

7. Method according to any of the preceding claims, in which the sensor is designed as a LiDAR sensor or laser scanner.

8. Method according to any of the preceding claims for monitoring a loading area (1) belonging to a vehicle, in which the sensor is arranged on a wall of the loading area (1) fitted with a loading opening, is directed to the opposite wall and the measuring range of the sensor comprises the entire loading area, the origin of the three-dimensional measurements being calibrated in a corner of the loading area.

9. Method according to any of the preceding claims, in which the confidence level and completeness of the changed 3D data of the second data set are checked and/or a threshold value for noise is determined during the measurement or classification.

10. Method according to any of the preceding claims, in which checking whether the changes in the 3D data are within the loading area (1) is carried out by the fact that the 3D data of the three-dimensional surfaces (2, 3, 4, 5) delimiting the loading area (1) belonging to the measurement points or measurement point sets as identified and identifiable 3D data clusters are defined as system limits for any comparison between preceding "first" and subsequent "second" data sets.

11. Method according to any of the preceding claims, in which a visual representation of the loading area (1), of the spatial allocation of the objects or load parts (6, 7, 8, 11) in the loading area (1), and of the current loading state, are displayed on a monitor in the form of a three-dimensional load image.

12. Method according to any of the preceding claims, in which the periodic measurement of the 3D data of each measurement point is preferably carried out at a frequency of 1 Hz (once per second).

13. Method according to any of the preceding claims, in which from the 3D data describing the width, height and depth of each individual object or load part (6, 7, 8, 11) located in the loading area, a required floor space and/or the volumes of the objects or load parts (6, 7, 8, 11) are ascertained and/or determined in relation to the available loading area space or in relation to the available volume of the loading area (1).

14. Method according to any of the preceding claims, in which the further processable signal is provided for storage in data processing systems, in particular for use in control devices and for use and processing within a data communication system.

15. Device for monitoring a loading area (1) for carrying out the method according to any of the preceding claims, wherein the device comprises at least one distance-measuring, depth-aware sensor for repeated, three-dimensional measurement of the loading area (1) and a computing or analysis unit with a programmed algorithm, wherein by means of the computing or analysis unit and the algorithm
- the descriptive 3D data of each measurement point of the three-dimensional surfaces delimiting the loading area and
- the descriptive 3D data of each measurement point of any objects or load parts (6, 7, 8, 11) located in the loading area
of each data set (3D point cloud) obtained by repeated measurement, by means of the method according to any of the preceding claims, are compared with one another and a processable signal is provided if changes are detected.

## Revendications

1. Procédé de surveillance d'un espace de chargement (1), dans lequel l'intérieur de l'espace de chargement (1) est mesuré en trois dimensions à l'aide d'au moins un capteur de mesure de distance sensible à la profondeur,
- des données 3D décrivant chaque point de mesure de surfaces tridimensionnelles délimitant l'espace de chargement ainsi que
- des données 3D décrivant chaque point de mesure de tout objet ou de toute partie de chargement (6, 7, 8, 11) se trouvant dans l'espace de chargement
étant stockées sous la forme d'une première quantité de données (nuage de points 3D) et étant pourvues d'un horodatage, au moins une autre mesure tridimensionnelle suivante étant effectuée à l'aide du capteur et des données 3D décrivant les points de mesure correspondants étant stockées sous la forme d'une deuxième quantité de données associée et étant également pourvues d'un horodatage,
- les données 3D de points de mesure ou de quantités de points de mesure de la première quantité de données étant comparées à des points de mesure ou quantités de points de mesure respectivement localement correspondants de la deuxième quantité de données au moyen d'un algorithme dans une unité de calcul ou d'évaluation après la mesure qui suit respectivement,
- dans le cas où des modifications des données 3D, qui se situent localement à l'intérieur de l'espace de chargement, sont déterminées lors de la comparaison des données 3D de points de mesure ou de quantités de points de mesure localement correspondants, un degré de confiance et une exhaustivité des données 3D modifiées de la deuxième quantité de données étant d'abord calculés à l'aide de l'algorithme et étant indexés de manière correspondante,
un signal pouvant être traité ultérieurement décrivant les modifications déterminées étant par la suite fourni et/ou des données 3D étant générées sur cette base pour une représentation visuelle de l'espace de chargement (1), une affectation locale des objets ou parties de chargement (6, 7, 8, 11) dans l'espace de chargement et un état de chargement courant, en particulier pour l'affichage sur un moniteur ou un appareil d'affichage, dans lequel, pour la classification des modifications à l'aide de l'algorithme, les données 3D modifiées sont soumises aux contrôles résultants suivants et sont affectées aux occurrences correspondantes :
a) dans la mesure où la modification des données 3D en comparaison avec la mesure précédente
• comporte des données 3D, qui décrivent des objets ou des parties de chargement (6, 7, 8, 11) non détectés au préalable
• sur des points de mesure ou des quantités de points de mesure correspondants localement,
l'événement (a) « charger/ajouter un objet ou une partie de chargement » est identifié ;
b) dans la mesure où la modification des données 3D en comparaison avec la mesure précédente
• comporte des données 3D, qui décrivent des objets ou des parties de chargement (6, 7, 8, 11) détectés au préalable,
• sur des points de mesure ou des quantités de points de mesure localement non correspondants,
l'événement (b) « déplacement d'un objet ou d'une partie de chargement » est identifié,
c) dans la mesure où la modification des données 3D en comparaison avec la mesure précédente
• ne comporte plus des données 3D, qui décrivent des objets ou des parties de chargement (6, 7, 8, 11) déjà détectés au préalable,
• sur des points de mesure ou des quantités de points de mesure correspondants localement,
l'événement (c) « retrait pièce de chargement ou objet » est identifié,
- un signal pouvant être traité ultérieurement correspondant étant par la suite fourni et/ou des données 3D étant générées pour une représentation visuelle de l'espace de chargement (1), une affectation locale des objets ou parties de chargement (6, 7, 8, 11) dans l'espace de chargement (1) et un état de chargement courant, en particulier pour l'affichage sur un moniteur ou un appareil d'affichage selon l'événement (a), (b) ou (c).

2. Procédé selon la revendication 1, dans lequel l'intérieur de l'espace de chargement (1) est mesuré périodiquement en trois dimensions.

3. Procédé selon la revendication 1 ou 2, dans lequel, lors de la mesure tridimensionnelle des objets ou parties de chargement (6, 7, 8, 11) se trouvant dans l'espace de chargement (1), leurs paramètres concernant en particulier leur position et leur largeur respectivement sont stockées sous forme de données 3D, de préférence dans des groupes de données 3D à affecter aux objets ou parties de chargement (6, 7, 8, 11) respectifs.

4. Procédé selon l'une des revendications précédentes, dans lequel, dans le cas d'une modification selon l'événement (a), (b) ou (c), la quantité des données 3D modifiées sont classifiées comme un sous-ensemble ou un groupe de données 3D et avec un marquage au moins pour identification, pour la détermination locale et pour la détermination des paramètres de l'objet ou de la partie de chargement (6, 7, 8, 11) décrit(e) par le sous-ensemble.

5. Procédé selon la revendication 4, dans lequel, dans le cas d'une modification selon l'événement (a), (b) ou (c), les sous-ensembles ou groupes de données 3D sont comparés à d'autres groupes de données 3D issus du voisinage local environnant, puis sont classifiés et sont pourvus d'un marquage.

6. Procédé selon l'une des revendications précédentes, dans lequel le capteur est formé comme un capteur optique de profondeur, de préférence comme une caméra à temps de vol ou une caméra stéréo.

7. Procédé selon l'une des revendications précédentes, dans lequel le capteur est formé comme un capteur LiDAR ou un scanner laser.

8. Procédé selon l'une des revendications précédentes pour surveiller un espace de chargement (1) appartenant à un véhicule, dans lequel le capteur est disposé sur une paroi de l'espace de chargement (1) pourvue d'une ouverture de chargement, est dirigé sur la paroi opposée et la plage de mesure du capteur comprend la totalité de l'espace de chargement, le point zéro des mesures tridimensionnelles étant étalonné dans un coin de l'espace de chargement.

9. Procédé selon l'une des revendications précédentes, dans lequel le degré de confiance et l'exhaustivité des données 3D modifiées de la deuxième quantité de données sont vérifiés et/ou une valeur de seuil pour un bruit pendant la mesure ou la classification est fixée.

10. Procédé selon l'une des revendications précédentes, dans lequel la vérification pour savoir si les modifications des données 3D se trouvent à l'intérieur de l'espace de chargement (1) est effectuée en ce que les données 3D des surfaces tridimensionnelles (2, 3, 4, 5) délimitant l'espace de chargement (1) associées aux points de mesure ou aux quantités de points de mesure sont fixées comme des groupes de données 3D marqués et identifiables en tant que limites de système pour toute comparaison entre la « première » quantité de données qui précède et la « deuxième » quantité de données qui suit.

11. Procédé selon l'une des revendications précédentes, dans lequel une représentation visuelle de l'espace de chargement (1), l'affectation locale des objets ou parties de chargement (6, 7, 8, 11) dans l'espace de chargement (1) et l'état de chargement courant sont représentés sous la forme d'une image de chargement tridimensionnelle sur un moniteur.

12. Procédé selon l'une des revendications précédentes, dans lequel la mesure périodique des données 3D de chaque point de mesure est effectuée de préférence à une fréquence de 1 Hz (une fois par seconde).

13. Procédé selon l'une des revendications précédentes, dans lequel un besoin de surface et/ou les volumes des objets ou parties de chargement (6, 7, 8, 11) sont déterminé à partir des données 3D décrivant la largeur, la hauteur et la profondeur de chaque objet individuel ou partie de chargement (6, 7, 8, 11) se trouvant dans l'espace de chargement et/ou sont définis en rapport avec la surface existante d'espace de chargement ou le volume existant de l'espace de chargement (1).

14. Procédé selon l'une des revendications précédentes, dans lequel le signal pouvant être traité ultérieurement est fourni pour le stockage dans des systèmes de traitement de données, en particulier pour l'utilisation dans des dispositifs de commande et pour l'utilisation et le traitement dans un système de communication de données.

15. Dispositif de surveillance d'un espace de chargement (1) pour la mise en œuvre du procédé selon l'une des revendications précédentes, le dispositif comportant au moins un capteur de mesure de distance sensible à la profondeur pour la mesure répétée en trois dimensions de l'espace de chargement (1) ainsi qu'une unité de calcul ou d'évaluation avec un algorithme programmé,
- les données 3D de description de chaque point de mesure des surfaces tridimensionnelles délimitant l'espace de chargement ainsi que
- les données 3D de description de chaque point de mesure de tout objet ou toute partie de chargement (6, 7, 8, 11) se trouvant dans l'espace de chargement
de chaque quantité de données obtenue par mesure répétée (nuage de points 3D) avec le procédé selon l'une des revendications précédentes étant comparées entre elles et un signal pouvant être traité étant fourni en cas de modifications détectées au moyen de l'unité de calcul ou d'évaluation et de l'algorithme.
